# EUROPEAN PATENT APPLICATION

(11) **EP 1 772 082 A1**
(43) Date of publication of application: **11.04.2007**
(21) Application number: 05380213.8
(22) Date of filing: 04.10.2005
(51) Int. Cl.: A47J 36/24, A47J 37/06

(54) **Folded - unfolded grill**

(71) Applicant: Electrodomesticos Taurus S.L., 25790 Oliana (Lleida) (ES)
(72) Inventor: Alet Vidal, Josep, 25790 Oliana (Lleida) (ES); Torregasa Prat, Josep, 25790 Oliana (Lleida) (ES); Trench Roca, Lluis, 25790 Oliana (Lleida) (ES)
(74) Representative: Manresa Val, Manuel

(57) **Abstract**

It is one of the type of those that comprise heating plates for cooking composed of a feeding system characterized in that it comprises at least two horizontal receptacles (2, 3) that include each one of them, respectively, at least one cooking plate (2', 3') fixed to itself, the receptacles (2, 3) being arranged in a relative mutual position between them in a foldable or unfoldable position and according to the wish of the user, so that in a total foldable position of the grill (1) it is allowed the utilisation of at least one cooking plate (2', 3'), and in a total unfoldable position of the grill (1) it is allowed the simultaneously utilisation of all the cooking plates (2', 3').

## Description

Foldable - unfoldable grill of the type of those that comprise heating plates for cooking composed of a feeding system, that comprises at least two horizontal receptacles that include each one of them respectively, at least one cooking plate fixed to itself, being able the receptacles to be arranged in a mutual relative foldable or unfoldable position between them and according to the wish of the user, so that in a total foldable position of the grill it is allowed the utilisation of at least one cooking plate, and in a total unfoldable position of the grill it is allowed the simultaneously utilisation of all the cooking plates.

### BACKGROUNDS OF THE INVENTION

It is known in the state of the art different types of portable grills for the cooking of foods.

Thus, such grills comprise a plate that is heated by an electric feeding system, for the cooking of the foods placed on top of it.

Such grills have the possibility to make an effective cooking of the foods placed on top of its heating plate, being generally used for the cooking of meats such as chops, steaks, etc, (known as grilled meat).

However, the above mentioned grills have the inconvenience of having just one heating plate and of small sized dimensions, since a plate of bigger proportions, or several in stead of one, would make extraordinarily difficult the moving and the manual portability of the grill for the user.

Thus, it is known the Spanish Utility Model n° 9103848 (ES 1019664), of the firm ELECTRODOMÉSTICOS SOLAC, S.A., of the year 1991 that makes reference to an improved sandwich grill, that being of the type of those that have a two bodies structure by way of valves, with an articulated joint in one of their edges comprising electric heater resistances in its interior, with stepped and complementary recesses determinant of housings for the sandwiches in its inner face, and in opposition to the line of the hinged of handles with fasten means that allow to fix one body with another in a close position, is characterized essentially in that the articulated junction hinges between the bodies are structured so that allow a complete disassembly of one body with respect to the other, from the close position or an adaptation between them to a situation in which said bodies are coplanar, as an elongation of one from the other, for the utilisation of the sandwich grill as a double grill, being foreseeing that said bodies being provided with external legs that stabilize them in such elongation situation fixing a full levelness for them and with the particularity that the such means consist of the protection casing of the wirings between the electric power cable and the inner electric resistances, and the external elongations of the handles, set at the starting level of the same, determinant of supporting edges spaced from the overall plane correspondingly to the external face of the bodies in a coincident magnitude with the height of the said container casing of the wirings.

### BRIEF DESCRIPTION OF THE INVENTION

The present invention involves a significant advance for the moving and hand portable grills by the own user.

Thus, in addition to keep up all the own cooking properties of the grills, it allows to have in the grill of at least two heater plates for the cooking and with the possibility of the utilisation of just one or several ones in a simultaneous way, therefore, being adapted to the capacity of cooking that the user needs, and allowing at the same time its foldable and unfoldable without problems for the storage and manual portability of the grill by the user.

Therefore, the present invention achieves to increase significantly the adaptability of the cooking capability of the grill, and in addition, the possibilities of storage, movement and manual portability by the user.

An object of the present invention is a foldable - unfoldable grill, of the type of those that comprise heating plates for cooking composed of a feeding system, that comprises at least two horizontal receptacles that include each one of them respectively, at least one cooking plate fixed to itself, being able the receptacles to be arranged in a mutual relative foldable or unfoldable position between them and according to the wish of the user, so that in a total foldable position of the grill it is allowed the utilisation of at least one cooking plate, and in a total unfoldable position of the grill it is allowed the simultaneously utilisation of all the cooking plates.

### BRIEF DESCRIPTION OF THE DRAWINGS

With the purpose to facilitate the explanation eight sheets of drawings are attached to the present description, in which a practical case of an embodiment has been reproduced, which is mentioned only for exemplificative, non limitative of the scope of the present invention:
- Figure 1 is a view of the grill of one embodiment in foldable position.
- Figures 2 and 3 are a view of intermediate unfoldable positions of the grill of the Figure 1.
- Figure 4 is a view of the grill in the Figure 1 in an unfoldable position.

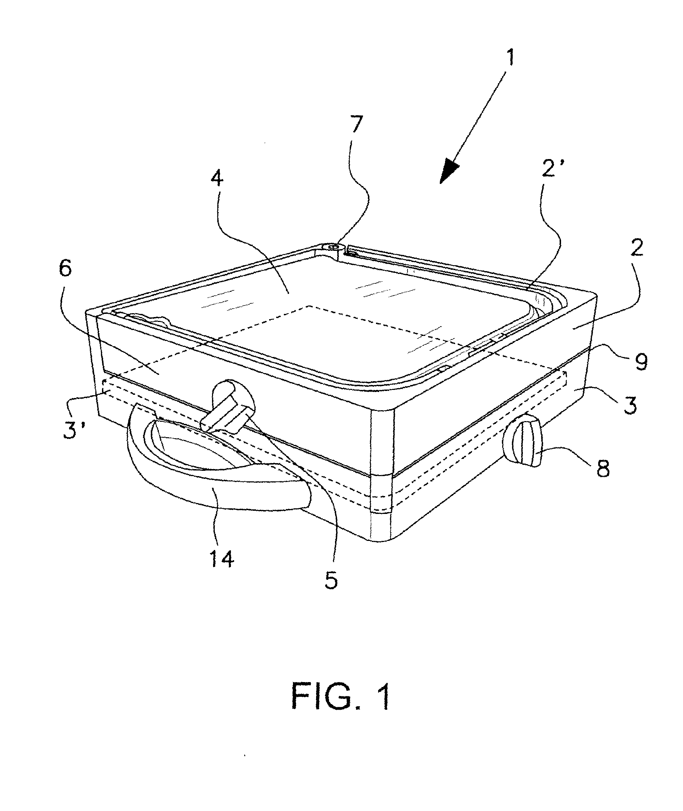

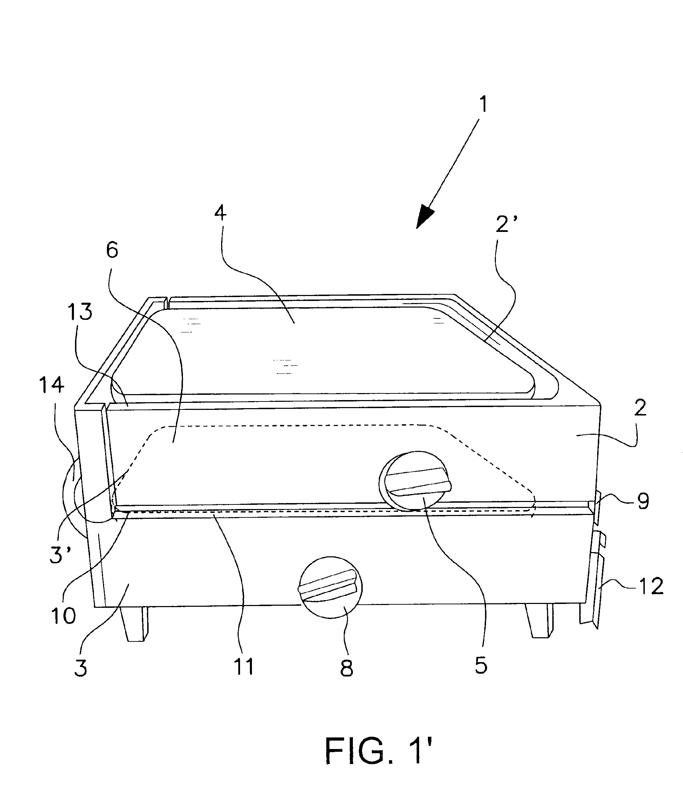

- Figure 1' is a view of another embodiment of the grill in a foldable position.

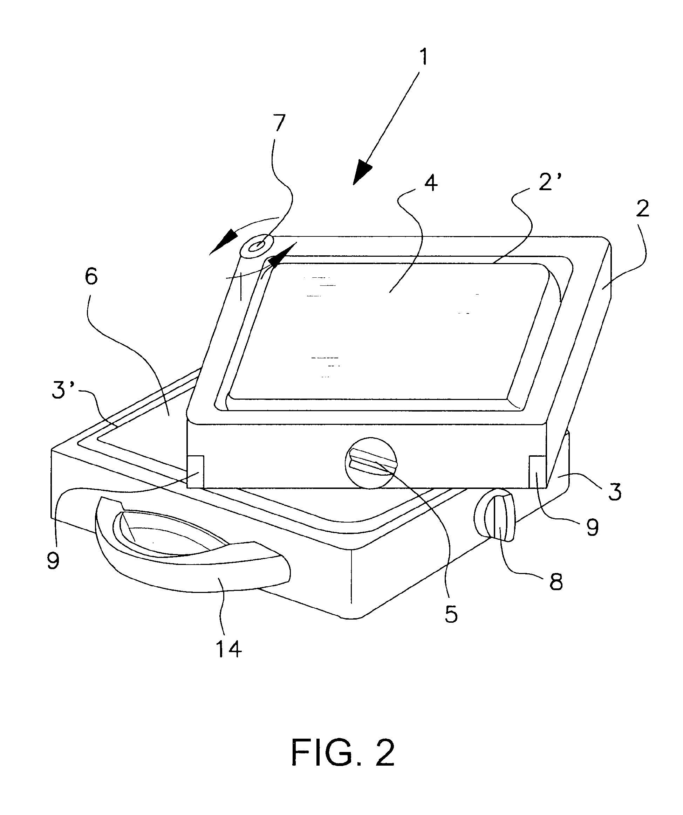

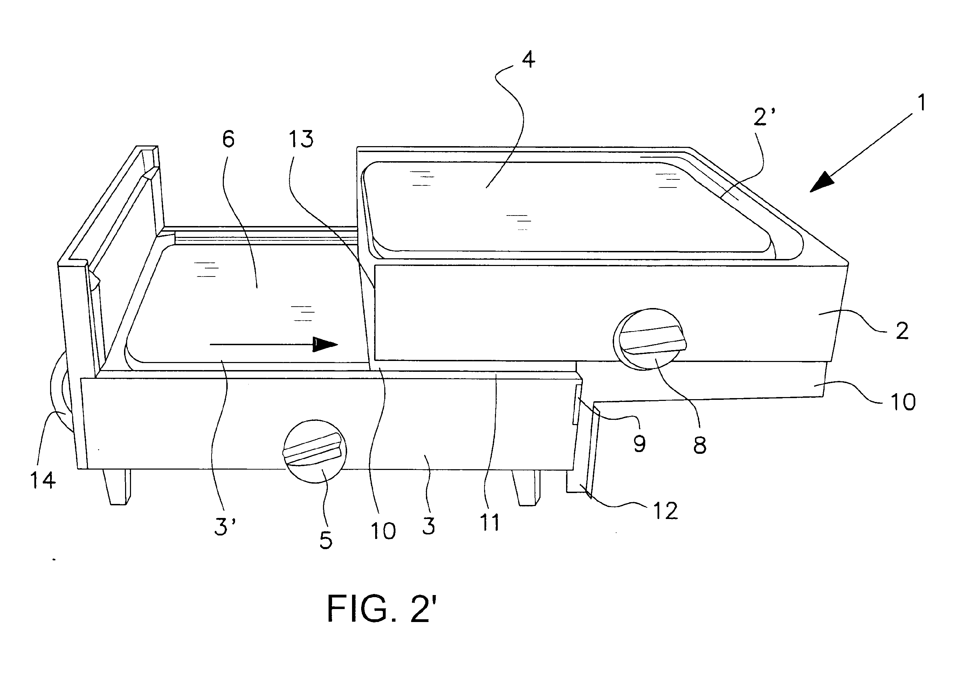

- Figures 2' and 3' are a view of the grill of the Figure 1' in intermediate unfoldable positions.

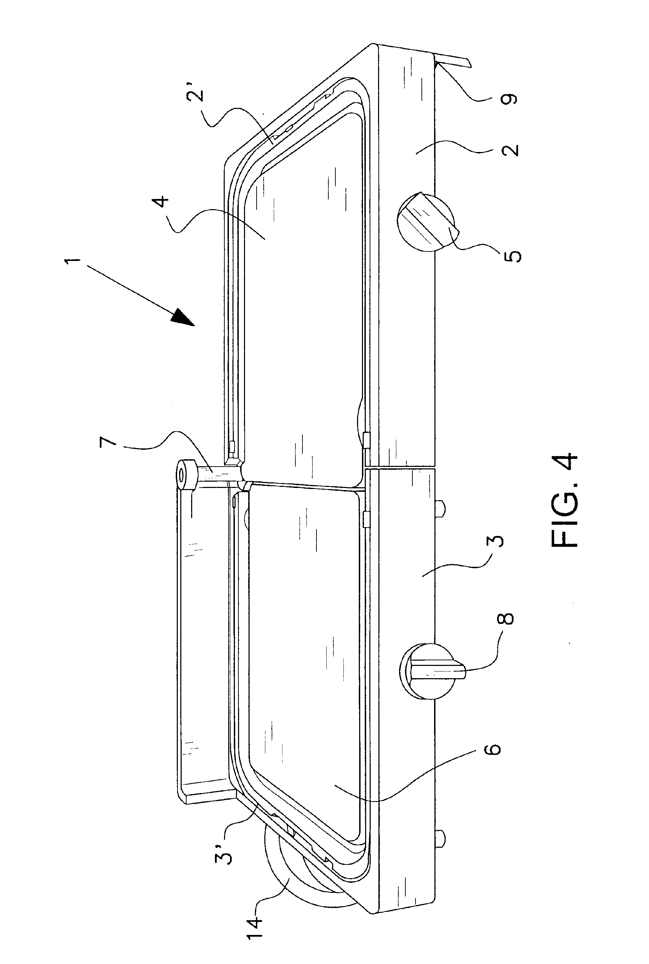

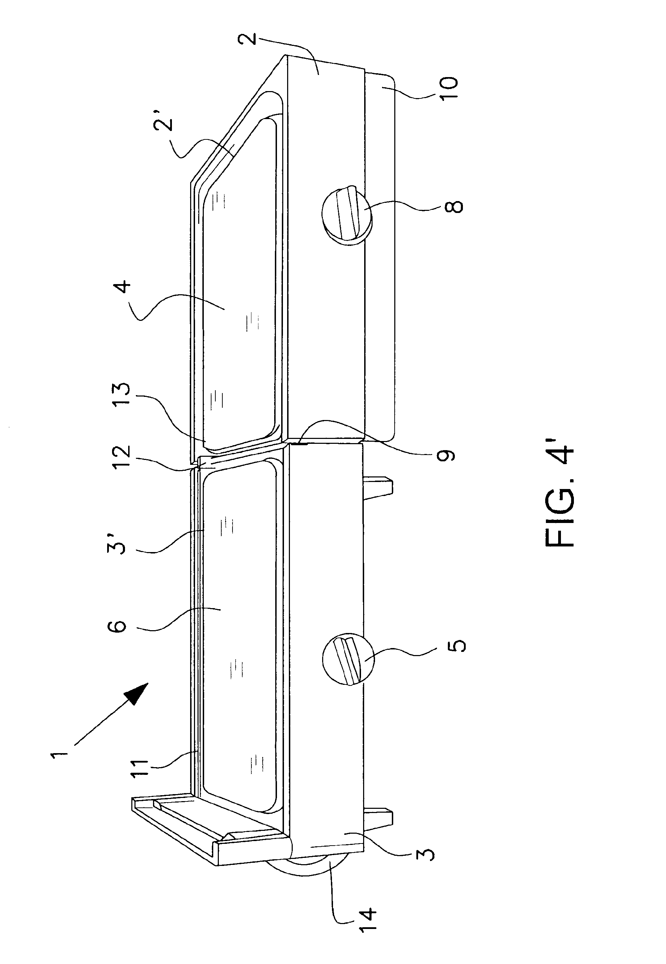

- Figure 4' is a view of the grill of the Figure 1' in unfoldable position.

### PREFERRED EMBODIMENT OF THE PATENT APPLICATION

Thus, in Figures 1, 2, 3 and 4 is shown the grill 1, the receptacles 2 and 3 with its respective plates 2' and 3', its surfaces 4 and 6 free of cooking, the pivot 7, and the operation controls 5 and 8, as well as the fixing means 9 and the handle 14.

In the Figures 1', 2' 3' and 4' is shown the grill 1, the receptacles 2 and 3 with its respective plates 2' and 3', its surfaces 4 and 6 free of cooking, the operation controls 5 and 8, and the guides 10 and 12 and the rails 11 and 13, as well as the fixing means 9 and the handle 14.

In a preferred embodiment, and such as it can be observed in the Figure 1, the grill 1 comprises two receptacles 2 and 3, upper and lower respectively, that contain respectively two upper and lower heating plates 1' and 2', fixed and integral to them.

The grill 1 can has two positions, of foldable and unfoldable, as the user wish.

In a foldable position shown in the Figure 1, the receptacles 2 and 3 are in a horizontal position one on top the other.

In said foldable position, the plate 2' of the receptacle 2 placed in the upper position of the grill 1 is usable for cooking, because has its upper surface 4 free, being its operation regulated by the user through the control 5.

In case that the user needs the utilisation of the two plates 2' and 3' simultaneously, is needed that the user proceed to the unfoldable of the grill 1, so the other plate 3' of the receptacle 3 that is shown covered in the Figure 1 because the receptacle 2 is on top of it (shown in broken line), also have its surface 6 free for its utilisation, as well as the plate 2'.

As it can be observed in the Figure 1, the receptacles 2 and 3 are in contact with a vertical pivot 7 located in one of the corners of both receptacles. Said pivot 7 is fixed and integral in the receptacle 3. However, the receptacle 2 is pivoted in said pivot 7, being also vertically sliding in it to use it as a guide.

This arrangement allows that the user can proceed to the unfoldable of the grill 1, because can turn and pivot to the receptacle 2 around to the pivot 7, keeping the receptacle 2 in the same horizontal plane, such as it is shown in the Figure 2.

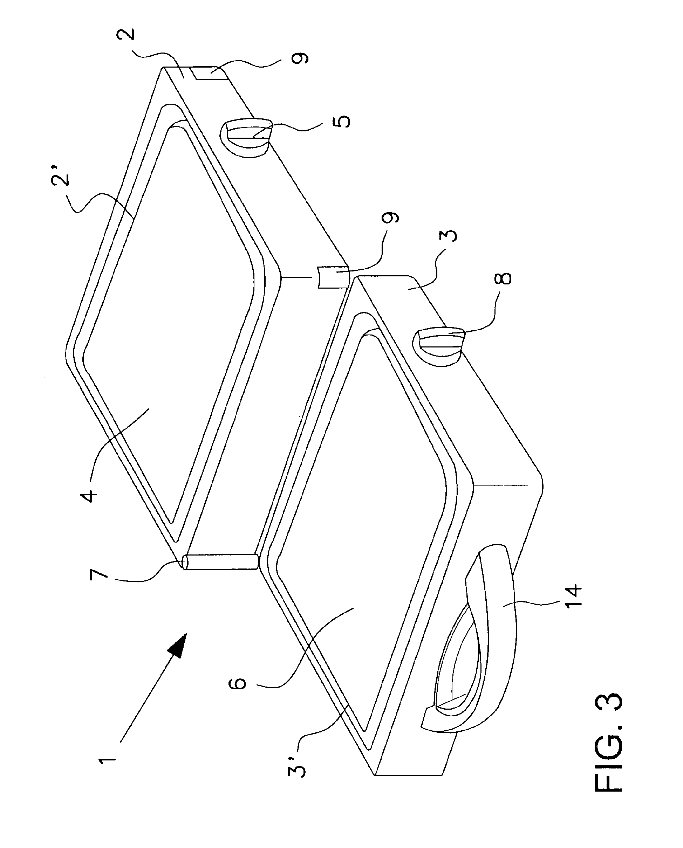

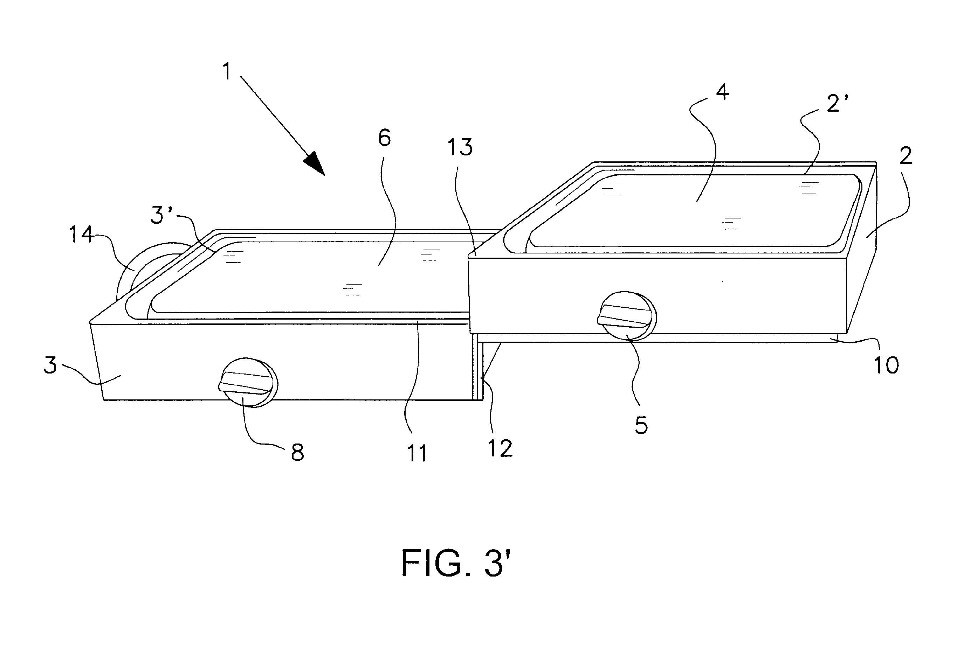

After the receptacle 2 has turned 90 degrees, in the specified direction by the arrow in the Figure 2, the receptacle 2 stays out of the vertical projection of the receptacle 3, such as is showed in the Figure 3.

When the receptacles 2 and 3 are in that mutual relative position, the receptacle 2 can use the pivot 7 as a guide to vertically slide downwards, as it was above mentioned, and finally stay in the adjacent position to the receptacle 3 shown in the Figure 4.

In said unfoldable position of the Figure 4 the two plates 2' and 3' situated respectively in the receptacles 2 and 3 are simultaneously usable for the cooking, because they have its respective upper surfaces 4 and 6 free, and through the operation and control of its respective controls 5 and 8 by the user.

In order to carry out the foldable of the grill 1, the user should proceed in an inverse way to that explained for the unfoldable.

The receptacle 2 further comprise a fixing means 9, in the form of butts in this preferred embodiment, that prevent the accidental or involuntary turn of the receptacle 2 (Figures 1 and 2). Such butts can be moved by the user, allowing in this way the turn of the receptacle 2 as the user wish.

In a further preferred embodiment, the receptacles 2 and 3 are initially horizontally situated one on top the other in the position shown in the Figure 1'.

In said foldable position shown in the Figure 1', the plate 2' of the receptacle 2 situated at the top of the grill 1 is usable for the cooking, because has its upper surface 4 free, being its operation regulated by the user through the control 5.

The receptacle 2 has a guides 10 in its lower lateral side, inserted at the same time in a rails 11 placed in the upper lateral side of the receptacle 3.

To proceed to the unfoldable of the grill 1, the user should move laterally the receptacle 2, such as it is shown by the arrow in the Figure 2', sliding the guides 10 through the rails 11.

When the receptacle 2 is slide enough to stay out of the vertical projection of the receptacle 3, such as it is shown in Figure 3', then other guides 12 of the receptacle 3 get to fit in the other rails 13 situated in the receptacle 2, so that the receptacle 2 can vertically slide downwards, until it stay adjacent to the receptacle 3 in the final position of unfoldable shown in the Figure 4'.

In said Figure 4' position the two plates 2' and 3' are simultaneously usable for the cooking which are respectively situated in the receptacles 2 and 3, because they have its respective upper surfaces 4 and 6 free, and through the operation and control of its respective controls 5 and 8.

To proceed to the foldable of the grill 1, the user should proceed in an inverse way to that explained for the unfoldable.

The receptacle 3 has a fixing means 9, in the form of butts, which prevent the accidental or involuntary movement of the receptacle 2 (Figures 1' and 2'). Such butts can be moved by the user, allowing in this way the sliding of the receptacle 2 as the user wish.

In the two described embodiments, the controls 5 and 8 of operation and control of each one of the plates 2' and 3' stay situated and faced in the same orientation and in the same frontal disposition, for the operation of the user.

The grill 1 of the invention comprises a feeding system for the heating of the plates 2' and 3', and to allow in this way the cooking of the foods placed on top of them.

The grill 1 of the invention comprises a handle 14, which can be handled with the hand of the own user, in such a way that the grill 1 is transportable and manually portable by the own user in foldable position, preventing through the fixing means 9 the accidental or involuntary unfoldable when moving.

As can be proofed, this invention involves the possibility of having a usable grill for the cooking both in foldable position and unfoldable position, been available one plate in a foldable position and two plates in unfoldable position usable in a simultaneously way, being very simple the foldable and unfoldable by the own user.

The present patent application describes a foldable and unfoldable grill. The examples here mentioned are not limitative of the present invention, for that reason it will be able to have different applications and/or be adapted, all of them within the scope of the following claims.

## Claims

1. Foldable - unfoldable grill of the type of those that comprise heating plates for cooking composed of a feeding system, **characterized in that** it comprises at least two horizontal receptacles (2, 3) that include each one of them, respectively, at least one cooking plate (2', 3') fixed to itself, the receptacles (2, 3) being arranged in a mutual relative foldable or unfoldable position between them and according to the wish of the user, so that in a total foldable position of the grill (1) it is allowed the utilisation of at least one cooking plate (2', 3'), and in a total unfoldable position of the grill (1) it is allowed the simultaneously utilisation of all the cooking plates (2', 3').

2. A grill according to claim 1, **characterized in that** in a foldable position, is defined an upper receptacle (2) and a lower receptacle (3), being the upper one (2) on top the lower one (3) and **in that** besides they are articulated between them by a pivot (7), being said pivot (7) fixed and integral in the lower receptacle (3), so that to move the grill (1) in a unfoldable position, the upper receptacle (2) can pivot and turn around the pivot (7) keeping in the same horizontal plane, until being situated out of the vertical projection of the lower receptacle (3), and then the upper receptacle (2) use the same pivot (7) as a guide to vertically slide until a final position adjacent to the position of the lower receptacle (3), and staying like this both receptacles (2, 3) in the unfoldable position in the same horizontal plane and joined by the pivot (7).

3. A grill according to claim 1, **characterized in that** the foldable position, the upper receptacle (2) is located on top the lower receptacle (3), comprising a guides (10) the upper receptacle (2) which slid through a rails (11) placed in the lower receptacle (3), so that to move the grill (1) to a unfoldable position, the upper receptacle (2) can horizontally slide over the lower receptacle (3) through the guides (10) inserted in the rails (11), until being situated out of the vertical projection of the lower receptacle (3), and then use the upper receptacle (2) other guides (12) placed in the receptacle (3) being vertically inserted and slid by other rails (13) fitted up in the own upper receptacle (2), in order to vertically slide until be placed in the upper receptacle (2) in a final position adjacent to the position of the lower receptacle (3), and staying like this both receptacles (2, 3) in the unfoldable position and joint by the guides (12) and the rails (13).

4. A grill according to claims 2 or 3, **characterized in that** in unfoldable position the operation controls (5 and 8) and respective control of each one of the plates (2' and 3') are positioned and faced with the same orientation and in the same frontal position, for its handling by the own user.

5. A grill according to claim 4, **characterized in that** comprise a fixing means (9) so that allow to immobilize the receptacles (2 and 3) in its mutual relative position of foldable and as the user wish, preventing the accidental or involuntary unfoldable of the grill (1).

6. A grill according to claim 4, **characterized in that** it comprises a handle (14), which can be handled by the hand of the user, so that it allows the manually movement of the grill (1) according to the user wish.
